# EUROPEAN PATENT SPECIFICATION

(11) **EP 3 614 396 B1**
(45) Date of publication and mention of the grant of the patent: **24.03.2021**
(21) Application number: 19191296.3
(22) Date of filing: 12.08.2019
(51) Int. Cl.: G21C 17/00

(54) **METHOD OF SIMULATING FLOW OF REACTOR COOLANT IN A CORE AND CORE SIMPLIFIED MODEL FOR THE METHOD**
VERFAHREN ZUR SIMULATION DER STRÖMUNG VON REAKTORKÜHLMITTEL IN EINEM KERN UND VEREINFACHTES KERNMODELL FÜR DAS VERFAHREN
PROCÉDÉ DE SIMULATION D'ÉCOULEMENT DE LIQUIDE DE REFROIDISSEMENT DE RÉACTEUR DANS UN NOYAU ET MODÈLE SIMPLIFIÉ DE NOYAU POUR CE PROCÉDÉ

(30) Priority: 16.08.2018 KR 20180095740
(43) Date of publication of application: 26.02.2020
(73) Proprietor: Kepco Engineering & Construction Company, Inc., Gimcheon-si Gyeongsangbuk-do 39660 (KR)
(72) Inventor: KIM, Kyoung Ryun, 34200 Daejeon (KR); PARK, Min Soo, 35212 Daejeon (KR); KIM, Ung Soo, 32835 Chungcheongnam-do (KR); HUH, Jae Young, 35201 Daejeon (KR); LEE, Gyu Cheon, 34049 Daejeon (KR)
(74) Representative: J A Kemp LLP

(56) References cited:
- CN-A- 106 340 329
- CN-A- 106 504 803
- CN-A- 106 531 240
- CN-A- 106 683 722
- CN-A- 106 803 431
- CN-A- 107 452 430
- CN-A- 107 527 664
- KR-B1- 100 957 066
- KR-B1- 101 754 287
- US-A- 2 316 832
- US-A- 6 164 565

## Description

This application claims the benefit of Korean Patent Application No. 10-2018-0095740, filed on August 16, 2018, in the Korean Intellectual Property Office.

The present invention relates to a method of simulating the flow of a reactor coolant in a core and a core simplified model used for the method, and more particularly, to a method of simulating the flow of a reactor coolant in a core by simplifying and modeling a fuel assembly installed in the core and a core simplified model used for the method.

Conventionally, in order to simulate the complex flow phenomenon of a reactor coolant occurring in a core of a reactor vessel, a miniature model was built by downscaling components like a fuel assembly and pressure drops occurring in the core were measured.

However, for the miniature model for an experiment, it is necessary to take into consideration not only a space for installing a fuel assembly of a core, but also a reactor vessel, internal components, peripheral equipment, etc. Since a conventional apparatus for experimenting the flow phenomenon of a reactor coolant using a miniature model needs to be built by downscaling an actual reactor core, a considerable cost is required, and it takes a long time to manufacture and install a reactor vessel and peripheral devices.

Prior art is disclosed in Korean Patent Registration No. 10-1512644. CN 106 683 722 A and CN 107 452 430 A are relevant to the technical background of the invention.

The present invention provides a method of simulating the flow of a reactor coolant in a core by simplifying and modeling fuel assemblies installed in the core to simulate the flow of the reactor coolant in the core and a core simplified model used therein. The invention is defined by the appended claims.

Additional aspects will be set forth in part in the description which follows and, in part, will be apparent from the description, or may be learned by practice of the presented embodiments of the disclosure.

The above and other aspects, features, and advantages of certain embodiments of the disclosure will be more apparent from the following description taken in conjunction with the accompanying drawings, in which:
FIG. 1 is a cross-sectional view of a reactor core;
FIG. 2 is a cross-sectional view taken along a line A-A of FIG. 1;
FIG. 3 is a flowchart of a method of simulating the flow of a reactor coolant according to an embodiment of the present invention;
FIG. 4 is a schematic view of a simplified model employed in an embodiment of the present invention;
FIG. 5 is a cross-sectional view taken along a line B-B of FIG. 4;
FIG. 6 is a schematic view of a simplified model employed in another embodiment of the present invention; and
FIG. 7 is a diagram showing the essential part of FIG. 6.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

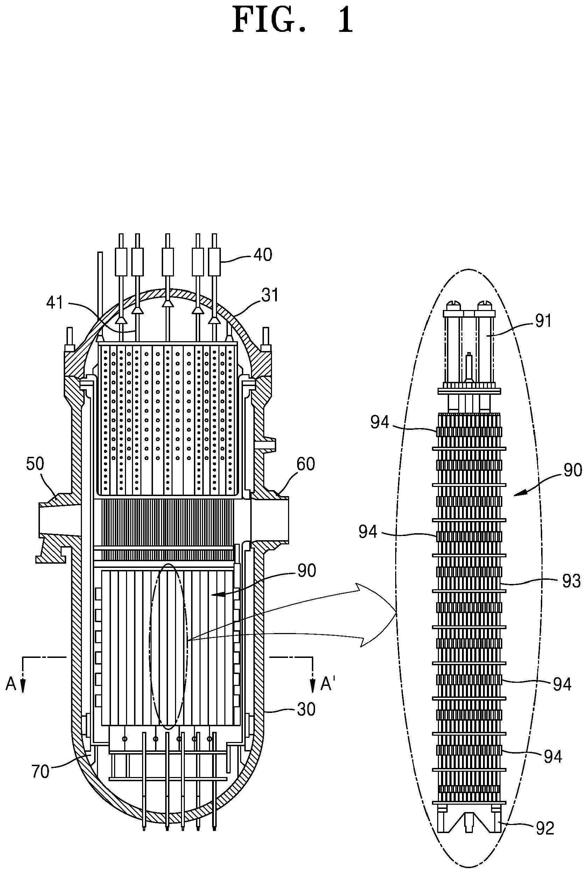

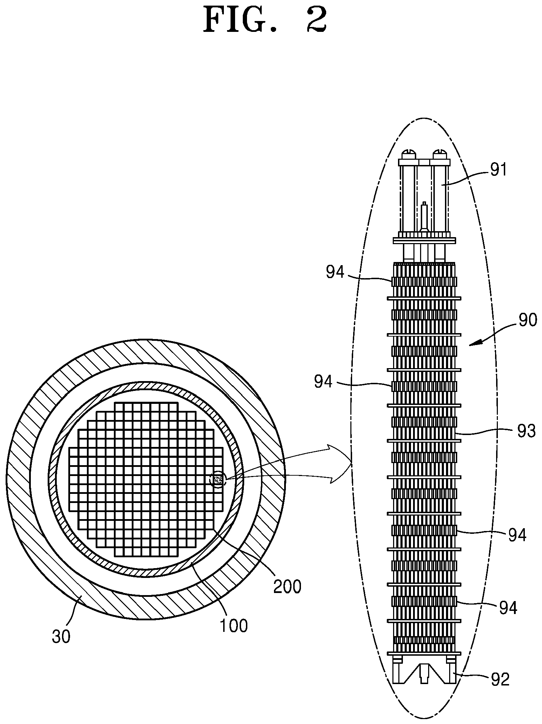

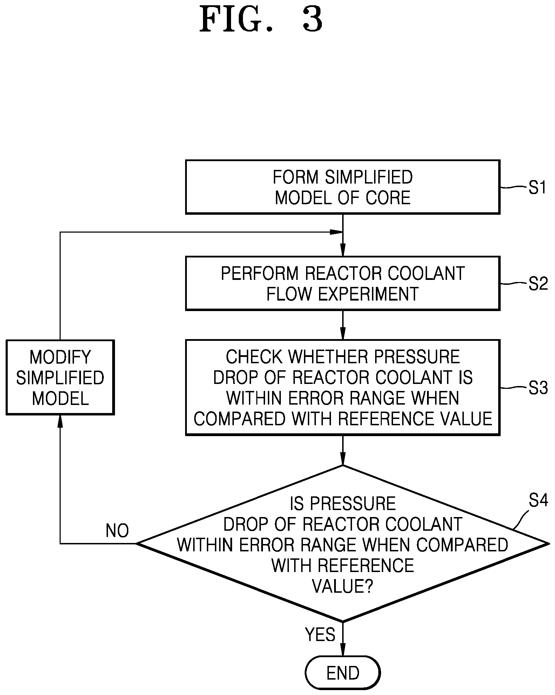

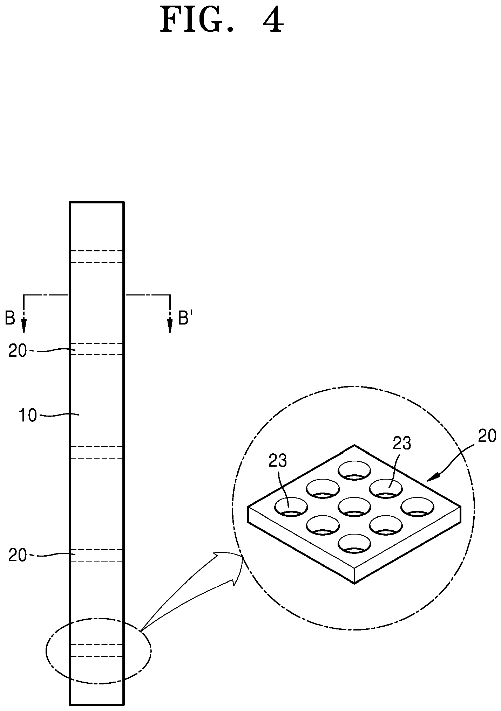

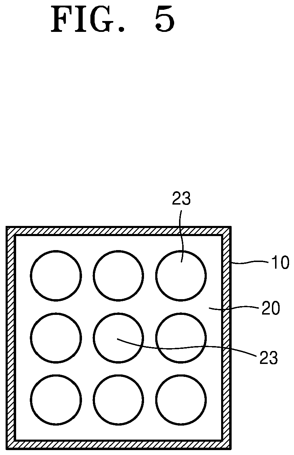

FIG. 1 is a cross-sectional view of a reactor core, and FIG. 2 is a cross-sectional view taken along a line A-A of FIG. 1. FIG. 3 is a flowchart of a method of simulating the flow of a reactor coolant according to an embodiment of the present invention. FIG. 4 is a schematic view of a simplified model employed in an embodiment of the present invention. FIG. 5 is a cross-sectional view taken along a line B-B of FIG. 4.

First, the reactor core will be described with reference to FIGS. 1 and 2.

Referring to FIG. 1, in the reactor core, hundreds of fuel assemblies 90 are accommodated in a reactor vessel 30, and an upper head 31 is coupled to the upper portion of the reactor vessel 30. Also, a control rod driving device 40 is provided at the upper portion of the reactor vessel 30 and an extension shaft 41 of a control rod assembly is coupled to the control rod driving device 40. In addition, an inlet nozzle 50 and an outlet nozzle 60 for introducing and discharging a reactor coolant are provided in the middle of the reactor vessel 30.

The reactor coolant introduced through the inlet nozzle 50 flows to the lower side of the reactor vessel 30, passes through a flux adjusting ring 70, introduced from the lower side of fuel assembly 90, flow to the upper side of the fuel assembly 90, and is discharged through the outlet nozzle 60. During this process, the reactor coolant transfers the heat of the core to a steam generator (not shown).

FIG. 2 is a cross-sectional view of the core shown in FIG. 1. In the reactor vessel 30, a core supporting barrel 100 surrounding the core 200 is provided. The core 200 is divided into hundreds of small lattice regions. The divided small rectangular regions are defined as channels. Fuel assemblies 90 are inserted into the small rectangular channels, respectively. As shown in the right sides of FIGS. 1 and 2, the fuel assembly 90 includes hundreds fuel rods 93 restrained by supporting lattices 94. An upper fixing unit 91 is provided on the fuel assembly 90 and a lower fixing unit 92 is provided below the fuel assembly 90, and thus the fuel assembly 90 is coupled to other components of the core and fixed.

It is very inefficient in terms of time and cost to fabricate an experimental facility by imitating such a complex core including hundreds of fuel assemblies 90 to understand the flow phenomenon of a reactor coolant. The present invention relates to simulation of the flow phenomenon of a reactor coolant through simplification of a complex core.

A method of simulating the flow of a reactor coolant in a core according to an embodiment of the present invention includes operation S1 for forming a simplified model by simplifying a core, operation S2 for performing a reactor coolant flow experiment, and operation S3 for checking whether a pressure drop measured in the flow experiment is within an error range of a reference value.

Operation S1 for forming a simplified model by simplifying the core is performed by arranging a plurality of induction plates 20, which induces pressure drop when a reactor coolant flows, in a vertical direction to be apart from one another. A plurality of penetration holes 23 are formed in the induction plate 20. The reactor coolant flows through the penetration holes 23 and collides with a portion of the induction plate 20 without the penetration holes 23, and thus a pressure drop occurs.

According to the present embodiment, operation S1 for forming the simplified model includes an operation for simulating one fuel assembly and an operation for forming lattice type channels.

Referring to FIGS. 4 and 5, in the operation for simulating one fuel assembly, the fuel assembly 90 actually installed in the core 200 is simulated as including an outer wall 10 and the induction plate 20.

The outer wall 10 is in the form of a hollow rectangular duct with open upper and lower portions. The outer wall 10 extends in the vertical direction.

The induction plate 20 has a rectangular shape and a plurality of penetration holes 23 are formed therein. A plurality of induction plates 20 are arranged inside the outer wall 10 to be apart from one another in the vertical direction. According to the present embodiment, the distance between the induction plates 20 is constant.

In the operation for forming channels, unit fuel assemblies simulated in the operation for simulating one fuel assembly are arranged adjacent to one another to form lattice type channels when viewed from above. The unit fuel assembly has a duct-like shape and a rectangular cross-section. When the unit fuel assemblies are arranged adjacent to one another, channels similar to the channels formed in the core 200 of FIG. 2 are formed.

Operation S2 for performing the reactor coolant flow experiment is to measure a pressure drop of the reactor coolant when the reactor coolant flows, and the reactor coolant flow experiment is performed by using the simplified model.

In detail, the reactor coolant is introduced into the reactor vessel 30 through four inlet nozzles 50 installed in the middle of the reactor vessel 30. As the reactor coolant flows through a downward flow path, a core region, and the outlet nozzle 60 on the reactor outlet side of the reactor vessel 30, a pressure is dropped and the reactor coolant is mixed with each other (or together). Therefore, the reactor coolant flow experiment is performed by measuring the pressure drop of the reactor coolant, a mixing ratio of the reactor coolant, and a flow distribution of the reactor coolant in the reactor vessel 30. For such measurements, equipments like a pump, a heat exchanger, a measurement device (e.g., a flow meter, a pressure sensor, a temperature sensors, etc.) may be installed. When the reactor coolant flows through the unit fuel assembly, the reactor coolant collides with the induction plate 20 and causes a pressure drop. Here, by providing a plurality of pressure sensors at the induction plate 20, the pressure drop of the reactor coolant may be effectively measured. The plurality of pressure sensors may be installed at points of a unit fuel assembly where pressure data needs to be obtained.

Operation S3 for checking whether a pressure drop of the reactor coolant measured in the flow experiment is within an error range of a reference value is an operation for checking whether the value of the pressure drop obtained by using the method of the present embodiment is within a permissible error range when compared with a design value related to an actual pressure drop of the reactor coolant in a nuclear power plant. Therefore, the reference value may be given as the same value as the design value of the pressure drop of the reactor coolant in an actual nuclear power plant.

The error range may be set to, for example, about ± 5% of the reference value. When a pressure drop is out of the above error range, the error of the pressure drop and/or a flow mixing ratio of the reactor coolant become remarkably large, and thus accurate values may not be predicted.

According to an embodiment of the present invention, the method may further include operation S4 for modifying the simplified model.

Operation S4 for modifying the simplified model is performed when a pressure drop of the reactor coolant measured through the flow experiment is outside an error range when compared with the reference value. In detail, operation S4 for modifying the simplified model may be performed by changing the number of the penetration holes 23 or by changing the number of the induction plates 20.

When the simplified model is modified by increasing the number of the penetration holes 23, the pressure drop of the reactor coolant is reduced. On the contrary, when the simplified model is modified by decreasing the number of the penetration holes 23, the pressure drop of the reactor coolant becomes more significant.

When the simplified model is modified by the number of the induction plates 20, the pressure drop of the reactor coolant increases. On the contrary, when the number of the induction plates 20 is reduced, the pressure drop of the reactor coolant may be reduced.

In the method of simulating the flow of the reactor coolant according to the above embodiment, since a unit fuel assembly corresponds to one channel, the flow distribution of the reactor coolant flowing into each channel may be effectively measured. For example, when 250 fuel assemblies are installed in an actual core, 250 unit fuel assemblies may be arranged adjacent to one another in a shape corresponding to the core and the flow distribution of the reactor coolant flowing into channels may be measured. The flow distribution refers to amounts of reactor coolant flowing into channels from the bottom of a core.

Also, according to the present embodiment, a flow mixing ratio of the reactor coolant may be effectively measured. The flow mixing ratio refers to a degree to which the reactor coolant introduced through the bottom of the core is mixed with each other (or together) before flowing into the channels and a degree to which the reactor coolant exiting the channels is mixed above the core. According to the present embodiment, the degree to which the reactor coolant is mixed with each other (or together) before flowing into the channels of the unit fuel assemblies and the degree to which the reactor coolant passed through the unit fuel assemblies is mixed above the core may be effectively measured.

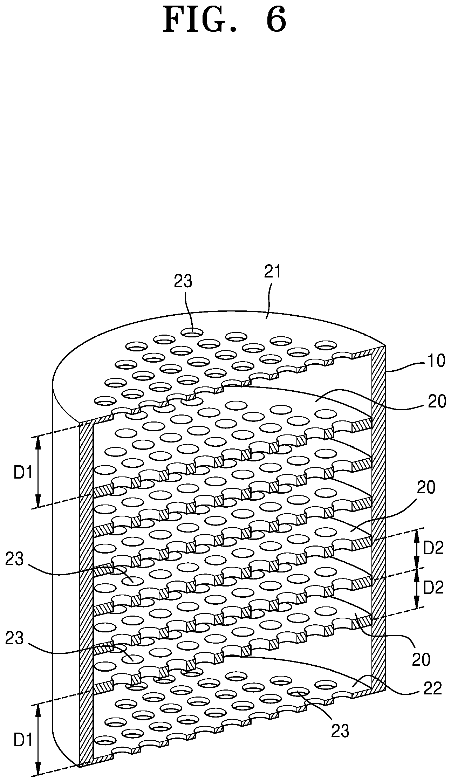

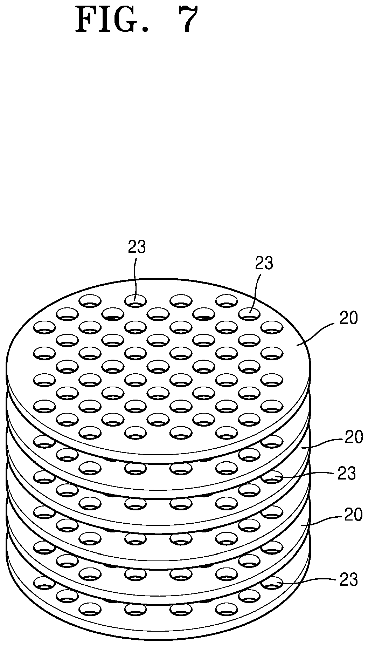

FIGS. 6 and 7 are diagrams showing a simplified model applied to a method of simulating the flow of a reactor coolant in a core according to another embodiment of the present invention.

According to the present embodiment, in operation S1 for forming the simplified model, the entire plurality of fuel assemblies arranged in the core are simplified into a single body. Therefore, the present embodiment differs from the embodiment of FIG. 4 in which each fuel assembly is modeled as a unit fuel assembly and a plurality of unit fuel assemblies are disposed adjacent to one another.

In detail, as shown in FIGS. 6 and 7, in operation S1 for forming the simplified model, the simplified model is formed by providing the outer wall 10 having a hollow cylindrical shape and arranging a plurality of induction plates 20 having a disk-like shape in the vertical direction to be apart from one another. According to the model, a reactor coolant flows between the induction plates 20.

A plurality of penetration holes 23 are formed in the induction plate 20. In the present embodiment, the number of the penetration holes 23 formed in the induction plate 20 may be the same as the number of fuel assemblies installed in an actual reactor core.

Referring to FIG. 6, an interval D1 between the outermost induction plates 21 and 22 coupled to the topmost and bottommost portions of the outer wall 10 and the induction plates 20 disposed inside the outermost induction plates 21 and 22 to be adjacent to the outermost induction plates 21 and 22 is larger than an interval between the induction plates 20 disposed inside the outer wall 10. The interval D1 larger than the interval D2 stabilizes the flow of the reactor coolant. In other words, the flow of the reactor coolant passed through the outermost induction plate 22 coupled to the bottommost portion of the outer wall 10 is stabilized before being introduced into the core, and the flow of the reactor coolant is stabilized before being discharged through the outermost induction plate 21 coupled to the topmost portion of the outer wall 10 is stabilized.

Similar to the method of simulating the flow of the reactor coolant to which the model shown in FIG. 4 and 5, the method of simulating the flow of the reactor coolant to which the model shown in FIG. 6 and FIG. 7 includes operation S2 for performing the flow experiment and operation S3 for checking whether a measured pressure drop is within an error range of a reference value.

Also, like the embodiment to which the model shown in FIGS. 4 and 5 is applied, the present embodiment may include an operation for modifying the simplified model. The modification of the simplified model may be performed by changing the diameter of the penetration hole 23 or the number of the induction plates 20. Descriptions of the structure and the operation substantially identical to those of the embodiment to which the model shown in FIGS. 4 and 5 are applied will be omitted.

When the simplified model is modified by increasing the diameter of the penetration holes 23, the pressure drop of the reactor coolant is reduced. On the contrary, when the simplified model is modified by reducing the diameter of the penetration holes 23, the pressure drop of the reactor coolant becomes more significant.

According to the present embodiment, the flow distribution of the reactor coolant in channels where the fuel assemblies are installed may be accurately measured. Since the penetration holes 23 of the number same as the number of fuel assemblies are formed to simulate an environment similar to the channels in the core and the flow of reactor coolant is permitted in the horizontal directions between the induction plates 20, measured values reflecting the flow in the horizontal directions may be obtained. Also, like the above embodiment, the flow mixing ratio of the reactor coolant may be measured in the present embodiment.

According to another embodiment of the present invention, aA core simplified model used to simulate the flow of a reactor coolant in a reactor core is suggested. The core simplified model provided by the present embodiment substantially includes the model according to FIGS. 4 and 5 and the model according to FIG. 6 and FIG. 7.

The model according to FIGS. 4 and 5 is formed by arranging unit fuel assemblies each simulating one fuel assembly adjacent to one another in a lattice-like shape.

The unit fuel assembly includes the outer wall 10 and the induction plate 20.

The outer wall 10 is in the form of a hollow rectangular duct with the open top and the open bottom. The induction plate 20 is provided to induce a pressure drop and is a rectangular plate having a plurality of penetration holes 23 formed therein. A plurality of induction plates 20 are arranged inside the outer wall 10 to be apart from one another in the vertical direction. According to the present embodiment, tThe distance between the plurality of induction plates 20 is constant. The outer wall 10 and the induction plate 20 simulate a fuel assembly actually installed in a reactor.

According to the present embodiment, the unit fuel assemblies are arranged adjacent to one another to form lattice type channels when viewed from above. The number of unit fuel assemblies may be the same as the number of fuel assemblies actually inserted into a reactor. The fuel assemblies adjacent to one another simulate the plurality of channels shown in FIG. 2.

On the other hand, the model according to FIGS. 6 and 7 simplify a plurality of fuel assemblies into a single body.

A plurality of fuel assemblies arranged in the core are simplified to include the outer wall 10 and the induction plates 20 and modeled.

In detail, the outer wall 10 has a hollow cylindrical shape. The induction plate 20 is provided to induce a pressure drop, has the shape of a disk having formed therein a plurality of penetration holes, and a plurality of induction plates 20 are arranged inside the outer wall 10 in the vertical direction to be apart from one another. According to the present embodiment, a reactor coolant flows between the induction plates 20 in the horizontal directions.

Also, according to the present embodiment, an interval D1 between the outermost induction plates 21 and 22 coupled to the topmost and bottommost portions of the outer wall 10 and the induction plates 20 disposed inside the outermost induction plates 21 and 22 to be adjacent to the outermost induction plates 21 and 22 is larger than an interval between the induction plates 20 disposed inside the outer wall 10. Also, according to the present embodiment, the number of the penetration holes 23 formed in the induction plate 20 may be the same as the number of fuel assemblies installed in an actual reactor core.

Since the interval D1 between the induction plates 20 is larger than the interval D2, the flow of the reactor coolant is stabilized. Since the number of the penetration holes 23 is same as the number of the fuel assemblies installed in an actual reactor core to simulate an actual environment, more accurate measurement value may be obtained.

As described above, a method of simulating the flow of a reactor coolant in a core according to the present invention and a core simplified model used therein enable effective measurement of a pressure drop, a flow mixing ratio, and a flow distribution of the reactor coolant by simulating an actual shape of fuel assemblies (hundreds of fuel rods, control rods, guide tubes, and measurement tubes, etc.) installed in a core into a simplified experimental device. Therefore, time and cost may be reduced as compared to a case where a structure identical to an actual reactor is installed, thus being economically efficient.

Also, according to the present invention, thermal hydrodynamic phenomena with a 3-dimensional spatial distribution may be simulated along with a pressure drop, a flow mixing ratio, and a flow distribution, data obtained according to the present invention may be utilized as useful information for designing peripheral structures including a reactor core, e.g., determination of a geometrical shape, an installation location, a size, etc.

The method of simulating the flow of a reactor coolant in a core according to the present invention enables checking the flow phenomenon of a reactor coolant flowing in a core of a reactor (e.g., the flow of a reactor coolant in a streamlined flowing region or the flow of a reactor coolant in a recirculation region) by using a simplified model.

A flow pressure drop value and a flow mixture ratio of a reactor coolant derived through a flow experiment of the reactor coolant may be utilized as useful information for safety analysis for verification of the safety of a nuclear power plant, e.g., data in preparation for a non loss-of-coolant accident (non-LOCA).

Data regarding the flow phenomenon of a reactor coolant obtained according to the present invention may be utilized in the development of an advanced pressurized light reactor type nuclear reactor, a new high-speed reactor, or small to mid-sized reactors.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the invention as defined by the following claims.

## Claims

1. A method of simulating flow of a reactor coolant in a core, the method comprising:
forming a simplified model of the core by arranging a plurality of induction plates (20) in a vertical direction to be apart from one another, each of the induction plates (20) comprising a plurality of penetration holes (23) for inducing a pressure drop when the reactor coolant flows in the core;
performing a reactor coolant flow experiment by using the simplified model to measure the pressure drop when the reactor coolant flows in the core; and
checking whether the measured pressure drop of the reactor coolant is within an error range by comparing the measured pressure drop to a reference value.

2. The method of claim 1, wherein the forming of the simplified model comprises:
simulating one fuel assembly by providing an outer wall (10) extending in the vertical direction and having a hollow rectangular duct-like shape with open upper and lower portions and arranging a plurality of said induction plates (20) having a rectangular shape to be apart from one another in a vertical direction inside the outer wall (10); and
forming lattice-type channels when viewed from above in the vertical direction by arranging unit fuel assemblies used in the simulating of the one fuel assembly to be adjacent to one another.

3. The method of claim 1 or 2, wherein, in the forming of the simplified model,
a plurality of fuel assemblies arranged in a core are modeled by providing an outer wall (10) extending in the vertical direction and having a hollow cylindrical shape and arranging a plurality of said induction plates (20) having a disk-like shape inside the outer wall (10) in the vertical direction,
to allow the reactor coolant to flow in horizontal directions between the induction plates (20).

4. The method of claim 3, wherein the number of penetration holes (23) formed in the induction plate (20) is equal to the number of fuel assemblies installed in an actual reactor core.

5. The method of any one of the preceding claims, further comprising modifying the simplified model when the measured pressure drop value is out of the error range when compared with the reference value,
wherein, in the modifying of the simplified model, the number of the penetration holes (23) is changed or the number of the induction plates (20) installed in the core is changed.

6. The method of any one of the preceding claims, further comprising modifying the simplified model when the measured pressure drop value is out of the error range when compared with the reference value,
wherein, in the modifying of the simplified model, a diameter of the penetration holes (23) is changed or the number of the induction plates (23) installed in the core is changed.

7. The method of any one of the preceding claims, wherein a distance between the induction plates (20) is constant.

8. The method of claim 3 or any claims dependent on claim 3, wherein an interval D1 between the outermost induction plates (21, 22) coupled to topmost and bottommost portions of the outer wall (10) having the hollow cylindrical shape and the induction plate (20) disposed adjacent to the outermost induction plates (21, 22) is greater than an interval D2 between the induction plates (20) disposed inside said outer wall (10).

9. A core simplified model configured to simulate a flow of a reactor coolant in a reactor core, the core simplified model comprising:
unit fuel assemblies that each simulate one fuel assembly by providing an outer wall (10) extending in a vertical direction and having a hollow rectangular duct-like shape with open upper and lower portions and arranging a plurality of induction plates (20) in the vertical direction inside the outer wall (10) to be apart from one another, the induction plates (20) for inducing a pressure drop, having a rectangular shape, and having formed therein a plurality of penetration holes (23), configured such that the reactor coolant flows through the penetration holes (23) in use,
wherein the simulated unit fuel assemblies are arranged adjacent to one another to form lattice type channels when viewed from above in the vertical direction.

10. The core simplified model of claim 9, wherein a distance between the plurality of induction plates (20) is constant.

11. A core simplified model configured to simulate a flow of a reactor coolant in a reactor core, wherein a plurality of fuel assemblies arranged in a core are modeled by providing an outer wall (10) extending in a vertical direction and having a hollow cylindrical shape and arranging a plurality of induction plates (20) having a disk-like shape and including a plurality of penetration holes (23) for inducing a pressure drop inside the outer wall (10) in the vertical direction, configured such that the reactor coolant flows through the penetration holes (23) in use, and
configured such that the reactor coolant is allowed to flow in horizontal directions between the induction plates (20).

12. The core simplified model of claim 11, wherein an interval D1 between the outermost induction plates (21, 22) coupled to the topmost and bottommost portions of the outer wall (10) and the induction plate (20) disposed adjacent to the outermost induction plates (21, 22) is greater than an interval D2 between the induction plates (20) disposed inside the outer wall.

13. The core simplified model of claim 11 or 12, wherein the core simplified model is configured to simulate a flow of a reactor coolant in a reactor core comprising a number of fuel assemblies installed therein that is equal to the number of penetration holes formed in the induction plates (20).

## Patentansprüche

1. Verfahren zum Simulieren der Strömung eines Reaktorkühlmittels in einem Kern, wobei das Verfahren Folgendes umfasst:
Bilden eines vereinfachten Modells des Kerns durch Anordnen einer Vielzahl von Einleitungsplatten (20) in einer vertikalen Richtung, sodass sie voneinander entfernt sind, wobei jede der Einleitungsplatten (20) eine Vielzahl von Durchgangslöchern (23) umfasst, um einen Druckabfall einzuleiten, wenn das Reaktorkühlmittel in dem Kern strömt;
Durchführen eines Reaktorkühlmittel strömungsexperiments durch Verwenden des vereinfachten Modells, um den Druckabfall zu messen, wenn das Reaktorkühlmittel in dem Kern strömt; und
Prüfen, ob der gemessene Druckabfall des Reaktorkühlmittels innerhalb eines Fehlerbereichs liegt, durch Vergleichen des gemessenen Druckabfalls mit einem Referenzwert.

2. Verfahren nach Anspruch 1, wobei das Bilden des vereinfachten Modells Folgendes umfasst:
Simulieren eines Brennelements durch Bereitstellen einer Außenwand (10), die sich in der vertikalen Richtung erstreckt und eine hohle, rechteckige, kanalartige Form mit offenen oberen und unteren Abschnitten aufweist, und Anordnen einer Vielzahl der Einleitungsplatten (20) mit einer rechteckigen Form, sodass sie voneinander entfernt sind, in einer vertikalen Richtung innerhalb der Außenwand (10); und
Bilden von Kanälen vom Gittertyp bei Betrachtung von oben in der vertikalen Richtung durch Anordnen von Einheitsbrennelementen, die beim Simulieren des einen Brennelements verwendet werden, sodass sie aneinander angrenzen.

3. Verfahren nach Anspruch 1 oder 2, wobei beim Bilden des vereinfachten Modells
eine Vielzahl von Brennelementen, die in einem Kern angeordnet sind, modelliert wird durch Bereitstellen einer Außenwand (10), die sich in der vertikalen Richtung erstreckt und eine hohle, zylindrische Form aufweist, und Anordnen einer Vielzahl der Einleitungsplatten (20) mit einer scheibenartigen Form innerhalb der Außenwand (10) in der vertikalen Richtung,
um dem Reaktorkühlmittel zu ermöglichen, in horizontalen Richtungen zwischen den Einleitungsplatten (20) zu strömen.

4. Verfahren nach Anspruch 3, wobei die Anzahl von Durchgangslöchern (23), die in der Einleitungsplatte (20) gebildet sind, gleich der Anzahl von Brennelementen, die in einem tatsächlichen Reaktorkern installiert sind, ist.

5. Verfahren nach einem der vorhergehenden Ansprüche, ferner umfassend Modifizieren des vereinfachten Modells, wenn der gemessene Druckabfall außerhalb des Fehlerbereichs im Vergleich mit dem Referenzwert liegt,
wobei beim Modifizieren des vereinfachten Modells die Anzahl der Durchgangslöcher (23) geändert wird oder die Anzahl der Einleitungsplatten (20), die im Kern installiert sind, geändert wird.

6. Verfahren nach einem der vorhergehenden Ansprüche, ferner umfassend Modifizieren des vereinfachten Modells, wenn der gemessene Druckabfall außerhalb des Fehlerbereichs im Vergleich mit dem Referenzwert liegt,
wobei beim Modifizieren des vereinfachten Modells ein Durchmesser der Durchgangslöcher (23) geändert wird oder die Anzahl der Einleitungsplatten (23), die im Kern installiert sind, geändert wird.

7. Verfahren nach einem der vorhergehenden Ansprüche, wobei ein Abstand zwischen den Einleitungsplatten (20) konstant ist.

8. Verfahren nach Anspruch 3 oder einem der Ansprüche in Abhängigkeit von Anspruch 3, wobei ein Intervall D1 zwischen den äußersten Einleitungsplatten (21, 22), die an oberste und unterste Abschnitte der Außenwand (10) mit der hohlen, zylindrischen Form gekoppelt sind, und der Einleitungsplatte (20), die an die äußersten Einleitungsplatten (21, 22) angrenzend angeordnet ist, größer ist als ein Intervall D2 zwischen den Einleitungsplatten (20), die innerhalb der Außenwand (10) angeordnet sind.

9. Vereinfachtes Kernmodell, das konfiguriert ist, eine Strömung eines Reaktorkühlmittels in einem Reaktorkern zu simulieren, wobei das vereinfachte Kernmodell Folgendes umfasst:
Einheitsbrennelemente, die jeweils ein Brennelement durch Bereitstellen einer Außenwand (10), die sich in einer vertikalen Richtung erstreckt und eine hohle, rechteckige, kanalartige Form mit offenen oberen und unteren Abschnitten aufweist, und Anordnen einer Vielzahl von Einleitungsplatten (20) in der vertikalen Richtung innerhalb der Außenwand (10), sodass sie voneinander entfernt sind, simulieren, wobei die Einleitungsplatten (20) zum Einleiten eines Druckabfalls, mit einer rechteckigen Form und mit einer darin gebildeten Vielzahl von Durchgangslöchern (23) derart konfiguriert sind, dass das Reaktorkühlmittel durch die Durchgangslöcher (23) im Einsatz strömt, und
wobei die simulierten Einheitsbrennelemente aneinander angrenzend angeordnet sind, um Kanäle vom Gittertyp bei Betrachtung von oben in der vertikalen Richtung zu bilden.

10. Vereinfachtes Kernmodell nach Anspruch 9, wobei ein Abstand zwischen der Vielzahl von Einleitungsplatten (20) konstant ist.

11. Vereinfachtes Kernmodell, das konfiguriert ist, eine Strömung eines Reaktorkühlmittels in einem Reaktorkern zu simulieren, wobei eine Vielzahl von Brennelementen, die in einem Kern angeordnet sind, modelliert wird durch Bereitstellen einer Außenwand (10), die sich in einer vertikalen Richtung erstreckt und eine hohle, zylindrische Form aufweist, und Anordnen einer Vielzahl von Einleitungsplatten (20) mit einer scheibenartigen Form und mit einer Vielzahl von Durchgangslöchern (23) zum Einleiten eines Druckabfalls innerhalb der Außenwand (10) in der vertikalen Richtung, die derart konfiguriert sind, dass das Reaktorkühlmittel durch die Durchgangslöcher (23) im Einsatz strömt, und
derart konfiguriert sind, dass dem Reaktorkühlmittel ermöglicht wird, in horizontalen Richtungen zwischen den Einleitungsplatten (20) zu strömen.

12. Vereinfachtes Kernmodell nach Anspruch 11, wobei ein Intervall D1 zwischen den äußersten Einleitungsplatten (21, 22), die an die obersten und untersten Abschnitte der Außenwand (10) gekoppelt sind, und der Einleitungsplatte (20), die an die äußersten Einleitungsplatten (21, 22) angrenzend angeordnet ist, größer ist als ein Intervall D2 zwischen den Einleitungsplatten (20), die innerhalb der Außenwand angeordnet sind.

13. Vereinfachtes Kernmodell nach Anspruch 11 oder 12, wobei das vereinfachte Kernmodell konfiguriert ist, eine Strömung eines Reaktorkühlmittels in einem Reaktorkern zu simulieren, der eine Anzahl von Brennelementen, die darin installiert sind, umfasst, die gleich der Anzahl von Durchgangslöchern, die in den Einleitungsplatten (20) installiert sind, ist.

## Revendications

1. Procédé de simulation d'écoulement d'un réfrigérant de réacteur dans un cœur, le procédé comprenant :
la formation d'un modèle simplifié du cœur par l'agencement d'une pluralité de plaques d'induction (20) dans une direction verticale pour être espacées les unes des autres, chacune des plaques d'induction (20) comprenant une pluralité de trous de pénétration (23) pour induire une chute de pression lorsque le réfrigérant de réacteur s'écoule dans le cœur ;
la réalisation d'une expérience d'écoulement de réfrigérant de réacteur par l'utilisation du modèle simplifié pour mesurer la chute de pression lorsque le réfrigérant de réacteur s'écoule dans le coeur ; et
la vérification du fait que la chute de pression mesurée du réfrigérant de réacteur est ou non dans une marge d'erreur par la comparaison de la chute de pression mesurée à une valeur de référence.

2. Procédé selon la revendication 1, dans lequel la formation du modèle simplifié comprend :
la simulation d'un ensemble combustible par la fourniture d'une paroi externe (10) s'étendant dans la direction verticale et ayant une forme en conduit rectangulaire creux avec des portions supérieure et inférieure ouvertes et l'agencement d'une pluralité desdites plaques d'induction (20) ayant une forme rectangulaire pour être espacées les unes des autres dans une direction verticale à l'intérieur de la paroi externe (10) ; et
la formation de canaux de type réseau, vus du dessus dans la direction verticale par l'agencement d'ensembles combustibles unitaires utilisés dans la simulation de l'ensemble combustible pour être adjacents les uns aux autres.

3. Procédé selon la revendication 1 ou 2, dans lequel, dans la formation du modèle simplifié,
une pluralité d'ensembles combustibles agencés dans un cœur sont modélisés par la fourniture d'une paroi externe (10) s'étendant dans la direction verticale et ayant une forme cylindrique creuse et l'agencement d'une pluralité desdites plaques d'induction (20) ayant une forme en disque à l'intérieur de la paroi externe (10) dans la direction verticale,
pour permettre au réfrigérant de réacteur de s'écouler dans des directions horizontales entre les plaques d'induction (20).

4. Procédé selon la revendication 3, dans lequel le nombre de trous de pénétration (23) formés dans la plaque d'induction (20) est égal au nombre d'ensembles combustibles installés dans un cœur de réacteur réel.

5. Procédé selon l'une quelconque des revendications précédentes, comprenant en outre la modification du modèle simplifié lorsque la valeur de chute de pression mesurée est hors de la marge d'erreur en comparaison avec la valeur de référence,
dans lequel, dans la modification du modèle simplifié, le nombre des trous de pénétration (23) est changé ou le nombre des plaques d'induction (20) installées dans le cœur est changé.

6. Procédé selon l'une quelconque des revendications précédentes, comprenant en outre la modification du modèle simplifié lorsque la valeur de chute de pression mesurée est hors de la marge d'erreur en comparaison avec la valeur de référence,
dans lequel, dans la modification du modèle simplifié, un diamètre des trous de pénétration (23) est changé ou le nombre de plaques d'induction (20) installées dans le cœur est changé.

7. Procédé selon l'une quelconque des revendications précédentes, dans lequel une distance entre les plaques d'induction (20) est constante.

8. Procédé selon la revendication 3 ou l'une quelconque des revendications dépendantes de la revendication 3, dans lequel un intervalle D1 entre les plaques d'induction les plus externes (21, 22) couplées aux portions la plus haute et la plus basse de la paroi externe (10) ayant la forme cylindrique creuse et la plaque d'induction (20) disposée adjacente aux plaques d'induction les plus externes (21, 22) est plus grand qu'un intervalle D2 entre les plaques d'induction (20) disposées à l'intérieur de ladite paroi externe (10).

9. Modèle simplifié de cœur configuré pour simuler un écoulement d'un réfrigérant de réacteur dans un cœur de réacteur, le modèle simplifié de cœur comprenant :
des ensembles combustibles unitaires qui simulent chacun un ensemble combustible par la fourniture d'une paroi externe (10) s'étendant dans une direction verticale et ayant une forme en conduit rectangulaire creux avec des portions supérieure et inférieure ouvertes et l'agencement d'une pluralité de plaques d'induction (20) dans la direction verticale à l'intérieur de la paroi externe (10) pour être espacées les unes des autres, les plaques d'induction (20) étant destinées à induire une chute de pression, ayant une forme rectangulaire, et ayant formés dans celles-ci une pluralité de trous de pénétration (23), configurés de sorte que le réfrigérant de réacteur s'écoule à travers les trous de pénétration (23) en utilisation,
dans lequel les ensembles combustibles unitaires simulés sont agencés adjacents les uns aux autres pour former des canaux de type réseau, vus du dessus dans la direction verticale.

10. Modèle simplifié de cœur selon la revendication 9, dans lequel une distance entre la pluralité de plaques d'induction (20) est constante.

11. Modèle simplifié de cœur configuré pour simuler un écoulement d'un réfrigérant de réacteur dans un cœur de réacteur, dans lequel une pluralité d'ensembles combustibles agencés dans un cœur sont modélisés par la fourniture d'une paroi externe (10) s'étendant dans une direction verticale et ayant une forme cylindrique creuse et l'agencement d'une pluralité de plaques d'induction (20) ayant une forme en disque et comportant une pluralité de trous de pénétration (23) pour induire une chute de pression à l'intérieur de la paroi externe (10) dans la direction verticale, configuré de sorte que le réfrigérant de réacteur s'écoule à travers les trous de pénétration (23) en utilisation, et
configuré de sorte que le réfrigérant de réacteur puisse s'écouler dans des directions horizontales entre les plaques d'induction (20).

12. Modèle simplifié de cœur selon la revendication 11, dans lequel un intervalle D1 entre les plaques d'induction les plus externes (21, 22) couplées aux portions la plus haute et la plus basse de la paroi externe (10) ayant et la plaque d'induction (20) disposée adjacente aux plaques d'induction les plus externes (21, 22) est plus grand qu'un intervalle D2 entre les plaques d'induction (20) disposées à l'intérieur de la paroi externe.

13. Modèle simplifié de cœur selon la revendication 11 ou 12, dans lequel le modèle simplifié de cœur est configuré pour simuler un écoulement du réfrigérant de réacteur dans un cœur de réacteur comprenant un nombre d'ensembles combustibles installés dans celui-ci qui est égale au nombre de trous de pénétration formés dans les plaques d'induction (20).
